# EUROPÄISCHE PATENTSCHRIFT

(11) **EP 0 382 115 B1**
(45) Veröffentlichungstag und Bekanntmachung des Hinweises auf die Patenterteilung: **10.05.1995**
(21) Anmeldenummer: 90102082.6
(22) Anmeldetag: 02.02.1990
(51) Int. Cl.: G01M 13/02, G01B 7/04, F16H 61/00, G05B 19/21

(54) **Überwachungseinrichtung für einen Bandantrieb**
Control device for a belt drive
Système de contrôle pour une transmission à courroie

(30) Priorität: 10.02.1989 DE 3904017
(43) Veröffentlichungstag der Anmeldung: 16.08.1990
(73) Patentinhaber: Gebrüder Hofmann GmbH & Co. KG Maschinenfabrik, D-64319 Pfungstadt (DE)
(72) Erfinder: Mönch, Uwe,, D-6140 Bensheim 1 (DE)
(74) Vertreter: Pfenning, Meinig & Partner

(56) Entgegenhaltungen:
- EP-A- 0 158 886
- DE-A- 3 334 612
- FR-A- 2 463 401
- SOVIET INVENTIONS ILLUSTRATED, Derwent, Sektion El, Woche 8515, Klasse X25, Veröffentlichung 22. Mai 1985; & SU-A-1114 598
- PATENT ABSTRACTS OF JAPAN, Band 10, Nr. 286 (M-521)[2342], 27. September 1986;& JP-A-61 103 757
- SOVIET INVENTIONS ILLUSTRATED, Derwent, Sektion El, Woche 8643, Klasse X25, Veröffentlichung 3. Dezember 1986; & SU-A-1214 961

## Beschreibung

Die Erfindung betrifft einen Bandantrieb mit einer Überwachungseinrichtung gemäß dem Oberbegriff von Anspruch 1.

Zum Antrieb von Rotoren jeglicher Art eignen sich Bandantriebe, bei denen der Antriebsriemen entweder um den anzutreibenden Rotor geschlungen ist oder der Antriebsriemen tangential am anzutreibenden Rotor anliegt. Der Bandantrieb wird immer dann bevorzugt, wenn Rotore mit unterschiedlichen Durchmessern in Drehung versetzt werden sollen. Es ist lediglich notwendig, daß an der Rotoroberfläche ein walzenförmiger Oberflächenteil vorhanden ist, an welchem der Antriebsriemen anliegt. Mit Hilfe des Antriebsriemens können nicht nur Antriebsmomente von einem Antriebsmotor übertragen werden, sondern es können auch Bremsmomente zum Anhalten des Rotors übertragen werden. Vor allem bei Rotoren, welche keine geeigneten Mitnahmemöglichkeiten haben, beispielsweise Rohren oder zylindrischen Rotoren, wird anstelle eines Gelenkwellenantriebs häufig ein Bandantrieb eingesetzt.

Vor allem bei der Übertragung hoher Drehmomente kann es bei längerer Betriebsdauer zu erheblichen Abnützungen des Antriebsriemens und auch zu Materialermüdung kommen. Dies führt nicht nur zu einer verschlechterten Drehmomentübertragung, sondern kann auch zu einem erheblichen Sicherheitsrisiko, insbesondere bei einem Bruch des Antriebsriemens, führen.

Dokument DE-A-3 334 612 zeigt eine Lösung dieses Problems an einer Hubkolbenbrennkraftmaschine mit Einrichtungen zum Betrieb der Maschine, wie Einspritzpumpe, Verteiler, Nockenwelle und dergleichen, die zumindest teilweise mittels eines Zahnriemens und entsprechender Zahnräder von der Nockenwelle aus angetrieben werden, wobei zur Überwachung der unzulässigen Längung bzw. Dehnung des Zahnriemens eine Dehnungsmeßeinrichtung in Form eines Sensorkopfes und Auslöseelementen am Zahnriemen vorgesehen ist, die eine Warn- und/oder Abstellvorrichtung für die Hubkolbenbrennkraftmaschine ansteuert. Die Überwachung erfolgt, bzgl. der Längsrichtung des Antriebsriemens, nur an einer Stelle der Maschine durch gegebenenfalls mehrere nebeneinander angeordnete Sensorköpfe.

Aufgabe der Erfindung ist es daher, eine Überwachungseinrichtung für einen Bandantrieb der eingangs genannten Art zu schaffen, durch die rechtzeitig eine Materialermüdung bzw. das Risiko eines Reißens des Antriebsriemens erfaßt werden kann.

Diese Aufgabe wird erfindungsgemäß durch den kennzeichnenden Teil von Anspruch 1 gelöst.

Materialermüdungen oder auch Fehlerstellen am Antriebsriemen äußern sich in Längenänderungen des Antriebsriemens. Zwangsläufig werden dabei auch die Abstände der ursprünglich in regelmäßigen Abständen voneinander vorgesehenen Markierungen am Antriebsriemen geändert. Wenn sich die Abstände der Markierungen auf dem Antriebsriemen ändern, ändert sich auch die zeitliche Folge der von den Markierungen in den Abtasteinrichtungen ausgelösten Signale. Wenn es sich hier um Impulse handelt, ist bei einwandfreiem Antriebsriemen die Impulsfolge, welche von beiden Abtasteinrichtungen abgegeben wird, in der zeitlichen Folge der Impulse aufeinander gleich. Das bedeutet, daß die Impulsfolgen der beiden Abtasteinrichtungen einen gleichbleibenden zeitlichen Versatz gegeneinander aufweisen oder gleichzeitig die jeweiligen Impulse der beiden Impulsfolgen von den Abtasteinrichtungen abgegeben werden. Insbesondere, wenn der Abstand der beiden Abtasteinrichtungen in Laufrichtung des Riemens voneinander ein ganzzahliges Vielfaches des jeweiligen Abstands der Markierungen auf dem Antriebsriemen voneinander sind, lassen sich zwei Impulsfolgen erzeugen, deren Impulse gleichzeitig abgegeben werden. Diese Gleichzeitigkeit der Impulse bzw. der konstant bleibende zeitliche Versatz der Impulse der beiden Impulsfolgen wird von der an die beiden Abtasteinrichtungen angeschlossenen Signalauswerteeinrichtungen erfaßt.

Wenn nun aufgrund von Materialermüdung oder einer sonstwie entstandenen Fehlerstelle eine Längung des Antriebsriemenmaterials auftritt, wird an der entsprechenden Stelle auch eine Änderung, insbesondere Vergrößerung, des Abstands der dort vorhandenen Markierungen zwangsläufig eintreten.

Diese Abstandsänderung äußert sich in einer veränderten Folge der entsprechenden Impulse in den beiden Impulsfolgen, die von den Abtasteinrichtungen abgegeben werden. Diese Änderung des zeitlichen Versatzes der entsprechenden Impulse in den beiden Impulsfolgen wird von der Signalauswerteeinrichtung erkannt, und wenn ein vorgegebener Schwellenwert der zeitlichen Abweichung überschritten wird, steuert die Signalauswerteeinrichtung beispielsweise eine Alarmeinrichtung an, die dann betätigt wird. Es kann dann der Riemen, bevor er noch stärker schadhaft wird und zu einem Sicherheitsrisiko wird, ausgewechselt werden.

Die erfindungsgemäße Überwachungseinrichtung kann daher als Sicherheitseinrichtung bei der Überwachung des Bandantriebs verwendet werden.

Eine weitere Verwendungsmöglichkeit der Überwachungseinrichtung besteht darin, daß aus den Markierungen auf dem Antriebsriemen eine Aussage über die jeweilige Drehwinkelposition des angetriebenen Rotors gewonnen werden kann. Dies erfolgt dadurch, daß mit Hilfe einer weiteren Abtasteinrichtung am Rotor eine Nullbezugsmarkierung abgetastet wird und mit dem von den Markierungen abgeleiteten periodischen Signal gekoppelt wird.

Mit Hilfe der Signalauswerteeinrichtung läßt sich aus den beiden periodischen Signalfolgen der die Riemenmarkierungen abtastenden Abtasteinrichtungen eine einzige periodische Signalfolge, beispielsweise eine Impulskette, deren Impulse in Abhängigkeit von den Markierungen auf dem Antriebsband gleiche Abstände voneinander aufweisen, erzeugen. Diese Impulskette kann einem Zähler zugeführt werden, dem auch der Ausgangsimpuls der Nullpunktabtasteinrichtung, welche die Nullmarkierung am Rotor abtastet, zugeleitet wird. Der Abtastimpuls der Nullpunktabtasteinrichtung kann als jeweiliger Rücksetzimpuls oder Startimpuls dienen, so daß der Rotorumfang durch die von der Signalauswerteeinrichtung gelieferten Impulse, welche von den Markierungen am Antriebsriemen abgeleitet sind, unterteilt ist. Hierdurch ist zwangsläufig auch eine Winkelaufteilung am Rotor gewonnen. Der jeweilige Zustand des Zählers gibt daher eine entsprechende Drehwinkelpositionierung des umlaufenden Rotors an.

Falls es erwünscht ist, den Rotor in einer bestimmten Winkellage anzuhalten, kann diese Winkellage mit dem entsprechenden Zählzustand des Zählers verglichen werden, und es kann der Antriebsmotor oder eine Bremseinrichtung angesteuert werden, um den Rotor bei Koinzidenz des Zählzustands mit dem vorgegebenen Zahlenwert, der dem gewünschten Winkel entspricht, anzuhalten.

Beispielsweise ist dieser Vorgang verwendbar beim Eindrehen eines Rotors in eine bestimmte Winkellage für einen am Rotor vorzunehmenden Bearbeitungsvorgang, z. b. einen Unwuchtausgleich.

Anhand der beiliegenden Zeichnung wird an einem Ausführungsbeispiel die Erfindung noch näher erläutert. Es zeigt:
- Fig. 1: ein Ausführungsbeispiel der Erfindung und
- Fig. 2: eine Weiterbildung des Ausführungsbeispiels.

In diesem Ausführungsbeispiel wird ein Rotor 1, der geprüft oder an dem Messungen oder Bearbeitungen vorgenommen werden sollen, über einen Antriebsriemen 3 von einem Antriebsmotor 2, beispielsweise einem Elektromotor, in Drehung versetzt. Für die Übertragung des Drehmoments umschlingt der Antriebsriemen 3 den Rotor 1. Ferner wird der Antriebsriemen um eine auf der Motorwelle sitzende Antriebsrolle 11 sowie um Umlenkrollen 8, 9, 10 geführt.

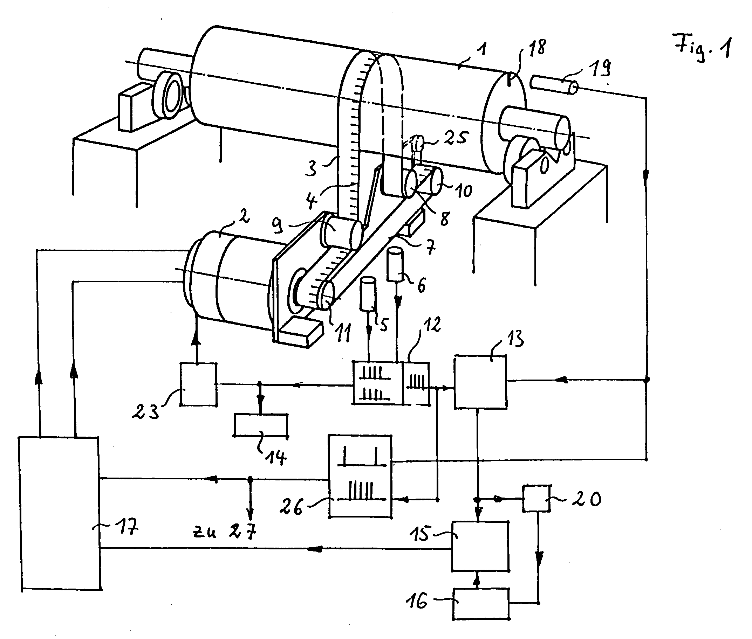

Wie die Figur 1 zeigt, sind am Antriebsriemen bevorzugt an der Außenseite, d. h. an der Seite, die nicht mit dem Rotor in Berührung kommt, Markierungen 4, die strichförmig ausgebildet sind, vorgesehen. Die strichförmigen Markierungen 4 erstrecken sich quer zur Laufrichtung des Antriebsriemens 3 und besitzen voneinander jeweils gleichen Abstand. Es genügt, wenn die Markierungen nur entlang einem der beiden Riemenränder angeordnet sind.

Beim dargestellten Ausführungsbeispiel wird der Antriebsriemen 3 zwischen der als Antriebsrolle ausgebildeten Umlenkrolle 11 und der weiteren Umlenkrolle 10 entlang einer geradlinigen Führungsstrecke 7 geführt. Im Bereich dieser geradlinigen Führungsstrecke 7 sind zur Abtastung der Markierungen 4 zwei Abtasteinrichtungen 5 und 6 vorgesehen, die in Laufrichtung des Antriebsriemens 3 einen bestimmten Abstand voneinander aufweisen. Bevorzugt ist dieser Abstand so bemessen, daß er ein ganzzahliges Vielfaches des Abstandes der Markierungen 4 voneinander ist. Jede Abtasteinrichtung 5 ung 6 gibt ein Abtastsignal ab, welches in Abhängigkeit vom Abstand der Markierungen voneinander eine Periodizität aufweist. Bevorzugt handelt es sich um eine Folge von Abtastimpulsen, welche von den beiden Abtasteinrichtungen 5 und 6 geliefert werden. Wenn der Abstand der beiden Abtasteinrichtungen 5 und 6 voneinander ein ganzzahliges Vielfaches des Abstandes der Markierungen 4 ist, können von den beiden Abtasteinrichtungen 5 und 6 zwei Impulsfolgen geliefert werden, deren Impulse zeitlich miteinander übereinstimmen. Die Abtastsignale werden einer Signalauswerteeinrichtung 12 zugeleitet. In dieser Signalauswerteeinrichtung 12 wird die zeitliche Übereinstimmung der Periodizität der beiden Abtastsignale, insbesondere die zeitliche Übereinstimmung der jeweiligen Impulse der beiden Impulsketten, erfaßt.

Es ist jedoch auch möglich, daß die Abtasteinrichtungen 5 und 6 Abtastsignale liefern, deren Periodizität zeitlich nicht miteinander übereinstimmt, jedoch einen konstanten zeitlichen Abstand voneinander während des Betriebs aufweist. Beispielsweise können bei einem impulsförmigen Abtastsignal die Impulse der beiden Impulsketten um eine konstante Zeit zueinander versetzt sein. Auch dies läßt sich durch die Signalauswerteeinrichtung 12 feststellen.

Wenn im Antriebsriemen an einer oder mehreren bestimmten Stellen Materialermüdungen auftreten und hierdurch zwangsläufig eine Längung des Riemens und damit eine Abstandsveränderung zwischen den entsprechenden Markierungen 4 auftritt, äußert sich dies in den von den Markierungsabständen abhängigen Abtastsignalen der beiden Abtasteinrichtungen 5 und 6. Die beiden Abtastsignale werden dann an den entsprechenden Stellen zeitlich nicht mehr miteinander übereinstimmen bzw. den konstanten Zeitunterschied nicht mehr zueinander aufweisen.

Wenn die zeitliche Änderung der Aufeinanderfolge, insbesondere der Impulse in den beiden Impulsketten, einen vorgegebenen Wert überschreitet, steuert die Signalauswerteeinrichtung 12 eine Alarmeinrichtung 14 an. Durch diese wird dann rechtzeitig angezeigt, daß der Antriebsriemen 3 schadhaft ist und gegen einen neuen Riemen ausgewechselt werden muß. Es ist auch möglich, eine Abschalteinrichtung 23 anzusteuern, durch die der Antriebsmotor 2 stillgesetzt wird.

Bei den Abtasteinrichtungen 5 und 6 kann es sich um beliebige Abtasteinrichtungen handeln. Es kann sich um optische, elektrische oder magnetische Abtasteinrichtungen handeln. In Abhängigkeit hiervon sind auch die Markierungen, insbesondere die strichförmigen Markierungen 4, ausgebildet.

Die von den beiden Abtasteinrichtungen 5 und 6 abgegebenen, in ihrer Periodizität vom Markierungsabstand abhängigen Signale lassen sich auch für eine Überwachung der jeweiligen Drehwinkelposition, die der Rotor 1 bei seiner Drehung einnimmt, auswerten. Hierzu wird in der Signalauswerteeinrichtung 12 aus den beiden Abtastsignalen, insbesondere impulsförmigen Abtastsignalen, eine Impulskette geformt, die in Abhängigkeit von den Markierungen 4 auf dem Antriebsriemen 3 Impulse mit konstanten zeitlichen Abständen aufweist. Diese Impulskette wird einem Zähler 13 zugeführt.

Ferner wird am Rotor 1 eine Nullmarkierung 18 mit Hilfe einer Nullpunktabtasteinrichtung 19 abgetastet. Bevorzugt liefert diese Nullpunktabtasteinrichtung 19 bei jeder Umdrehung des Rotors 1 in Abhängigkeit von der Abtastung der Nullmarkierung 18 einen Impuls, der ebenfalls dem Zähler 13 zugeleitet wird.

Der Abtastimpuls der Nullpunktabtasteinrichtung 19 hat für den Zähler 13 die Funktion eines Start- bzw. Rücksetzimpulses, so daß bei jeder Rotorumdrehung des Rotors 1 eine neue Zählung der von der Signalauswerteeinrichtung 12 gelieferten Impulse im Zähler 13 erfolgt. Die jeweiligen Zählwerte entsprechen Winkelabschnitten des Rotors bzw. Umfangsabschnitten am Rotor 1. Auf diese Weise läßt sich der Rotorumfang in Winkelabschnitte bzw. Längenabschnitte, die durch die Zählwerte des Zählers 13 angegeben sind, einteilen. Diese Zählwerte können einer Wiedergabeeinrichtung 20 zugeführt werden, so daß man jederzeit eine Information über die jeweilige Drehwinkelposition des Rotors 1 erhält.

Wenn der Rotor 1 in einer bestimmten Drehwinkelposition, die in einer Speichereinrichtung 16 abgespeichert sein kann, angehalten werden soll, werden die jeweiligen Zählwerte des Zählers 13 auch einer Vergleichseinrichtung 15 zugeführt, in welcher der im Speicher 16 gespeicherte Wert mit dem jeweiligen Zählerstand verglichen wird. Von der Vergleichseinrichtung 15 wird eine Motorsteuereinrichtung 17 angesteuert, durch die für das Stillsetzen des Rotors 1 der Motor 2 abgebremst wird, so daß der Rotor 1 an der im Speicher 16 abgespeicherten Winkelposition des Rotors 1 angehalten wird. Anstelle des Motors 2 kann auch eine Bremseinrichtung zum Anhalten des Rotors 1 in der gewünschten Winkelposition angesteuert werden.

Die im Speicher 16 gespeicherte Drehwinkelposition für den Rotor 1 kann bei einem Meßlauf, bei welchem der Rotor 1 beispielsweise im Hinblick auf vorhandene Unwuchten gemessen wurde, als Unwuchtwinkellage ermittelt worden sein. In der Speichereinrichtung 16 sind dann die Unwuchtwinkellagen gespeichert, und mit Hilfe des oben beschriebenen Eindrehvorgangs wird dann der Rotor 1 in die entsprechende Winkelposition gebracht, in welcher der Unwuchtausgleich durchgeführt wird.

Dieser Eindrehvorgang kann jedoch auch zum Eindrehen des Rotors 1 in eine bestimmte Winkelposition zur Durchführung anderer Arbeitsabläufe und anderer Rotorbearbeitungen erfolgen.

Die in der Speichereinrichtung 16 abgespeicherte Winkelinformation kann auch durch Auswertung eines von dem Zähler 13 gelieferten Zählwerts während des Meßlaufs des Rotors 1 gewonnen werden.

Beim dargestellten Ausführungsbeispiel umschlingt der Antriebsriemen 3 den Rotor 1 etwa U-förmig. Es ist jedoch auch möglich, die erfindungsgemäße Überwachungseinrichtung bei einem Bandantrieb anzuwenden, bei welchem der Antriebsriemen 3 tangential am Rotor 1 anliegt.

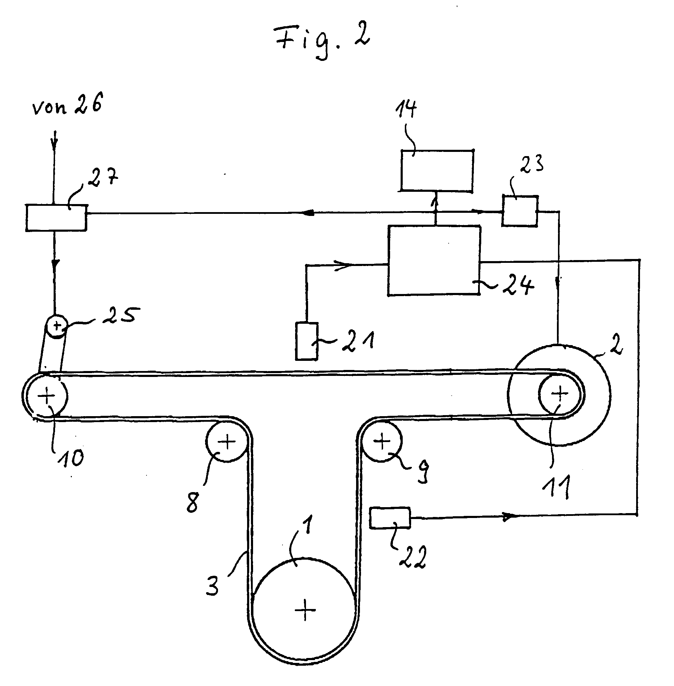

In der Fig. 2 ist eine weitere Abtasteinrichtung gezeigt, welche als Schwingungsabtasteinrichtung zur Erfassung von Transversalschwingungen des Antriebsriemens 3 ausgebildet ist. Diese Schwingungsabtasteinrichtung besitzt zwei Meßwertgeber 21 und 22. Der eine Meßwertgeber 21 ist in dem Riementeil angeordnet, welcher vom Antriebsmotor 2 zum Rotor 1 zurückläuft, d. h. im sogenannten Leerteil des Antriebsriemens 3. Der andere Meßwertgeber 22 ist in dem Riementeil angeordnet, welcher vom Rotor 1 zum Antriebsmotor 2 läuft, und mit welchem das Drehmoment vom Motor 2 auf den Rotor 1 übertragen wird. Dieser Riementeil ist der sogenannte Zugteil des Antriebsriemens 3.

Transversalschwingungen, d. h. senkrecht zur Riemenoberfläche erfolgende Schwingungen, können aus fehlerhafter Riemenspannung oder aus Riemenmaterialfehlern entstehen. Transversalschwingungen können auch dann auftreten, wenn bei hohen Umlaufgeschwindigkeiten die Eigenresonanz des Antriebsriemens erreicht wird.

Die den Transversalschwingungen (Flattern) des Antriebsriemens 3 proportionalen Signale der Meßwertgeber 21 und 22, welche bevorzugt als kapazitive Meßwertgeber ausgebildet sind, werden einer Schwingungssignalauswerteschaltung 24 zugeleitet. Diese Auswerteschaltung 24 ermittelt, ob die Transversalschwingungen einen Toleranzwert überschreiten oder nicht. Bei Überschreitung des Toleranzwertes wird die Alarmeinrichtung 14 und/oder die Abschalteinrichtung 23 für den Antriebsmotor 2 angesteuert.

Die in der Fig. 2 dargestellte Überwachungseinrichtung kann allein oder zusammen mit der in der Fig. 1 dargestellten Überwachungseinrichtung zur Anwendung kommen.

Für eine einwandfreie Riemenführung ist eine Riemenspanneinrichtung 25 vorgesehen, welche beim dargestellten Ausführungsbeispiel an der Umlenkrolle 10 angreift. Wenn durch die Schwingungssignalauswerteschaltung 24 (Fig. 2) festgestellt wird, daß ein vorbestimmter Toleranzwert, insbesondere der Amplitude der Transversalschwingungen, überschritten wird, kann, wie es in Fig. 2 dargestellt ist, eine Steuereinrichtung 27 mit einem entsprechenden Signal der Schwingungssignalauswerteschaltung 24 versorgt werden. In dieser Steuereinrichtung 27 wird ein Ausgangssignal erzeugt, durch welches die Riemenspanneinrichtung 25 zum Nachspannen des Antriebsriemens 3 so lange betätigt wird, bis der Antriebsriemen keine Transversalschwingungen mehr aufweist bzw. diese Schwingungen innerhalb der zulässigen Toleranz liegen.

In bevorzugter Weise wird durch die Abtasteinrichtungen 5 und 6 und die daran angeschlossene Signalauswerteeinrichtung 12 die beim Nachspannen des Antriebsriemens 3 erzeugte Riemenlängung überwacht. Hierdurch wird gewährleistet, daß eine durch das Nachspannen verursachte Riemenlängung nur innerhalb des zulässigen Toleranzwertes erfolgt. Hierbei werden vor allem auch örtlich begrenzte Riemenlängungen erfaßt, wie schon erläutert wurde.

Ferner kann aus der Abtastung der Riemenmarkierung, insbesondere der Markierungen 4, und der Abtastung der Nullmarkierung 18 am Rotor 1 ein dem Riemenschlupf proportionales Schlupfsignal gebildet werden. Dieses Schlupfsignal läßt sich ableiten aus dem in der Signalauswerteeinrichtung 12 gebildeten, den Markierungen entsprechenden Abtastsignal und der Nullmarkierung 18. Dabei wird eine Änderung der zeitlichen Aufeinanderfolge von dem der Nullmarkierung 18 am Rotor 1 entsprechenden Abtastsignal, insbesondere Abtastimpuls, und von einem Rotorumlauf entsprechenden Abtastsignalen erfaßt. Dies kann in einer Zeitüberwachungsschaltung 26 erfolgen. Diese Zeitüberwachungsschaltung ist, wie die Fig. 1 zeigt, mit dem Ausgang der Abtasteinrichtung 19 und dem Ausgang der Signalauswerteeinrichtung 12 verbunden. Der Zeitüberwachungsschaltung 26 werden mithin ein der Nullmarkierung 18 am Rotor 1 entsprechender Impuls, der bei seinem jeweiligen Erscheinen anzeigt, daß der Rotor eine Umdrehung ausgeführt hat, sowie die am Ausgang der Signalauswerteeinrichtung 12 abgegebene Impulskette, welche auch dem Zähler 13 zugeliefert wird, zugeführt. Die Zeitüberwachungsschaltung erfaßt dabei die zeitliche Verschiebung der innerhalb einer Rotorumdrehung, d. h. innerhalb zweier von der Abtasteinrichtung 19 gelieferter Abtastimpulse, erscheinenden Abtastimpulse, die von den Markierungen 4 des Riemens 3 abgeleitet sind, und bildet ein entsprechendes Schlupfsignal. Dieses Schlupfsignal kann zur Schlupfkompensation ausgewertet werden und läßt sich hierzu der Steuereinrichtung 17 zuführen, mit welcher das Eindrehen des Rotors 1 in eine bestimmte Winkellage erfolgt. Das Schlupfsignal kann zusätzlich auch der Steuereinrichtung 27 (Fig. 2) zugeführt werden, welche die Riemenspanneinrichtung 25 zum Nachspannen des Riemens 3 dann in Abhängigkeit vom ermittelten Schlupf betätigt. Auf diese Weise läßt sich durch entsprechendes Nachspannen des Antriebsriemens 3 der aufgetretene Schlupf wieder beseitigen. Vor allem bei Bandantrieben, mit denen hohe Drehmomente vom Antriebsmotor auf den Rotor übertragen werden, ist die erfindungsgemäße Überwachungseinrichtung von Nutzen.

## Patentansprüche

1. Bandantrieb mit Überwachungseinrichtung, bei welchem ein von einem Antriebsmotor geliefertes Drehmoment über einen endlosen Antriebsriemen auf einen zu drehenden Rotor übertragen wird, mit
- auf dem Antriebsriemen (3) in seiner Längsrichtung angeordneten abtastbaren Markierungen (4), die jeweils gleiche Abstände voneinander aufweisen,
- und mit einer Signalauswerteeinrichtung, welche die abgetasteten Signale auswertet,
dadurch **gekennzeichnet,** daß
- in Riemenlaufrichtung hintereinander und entlang einer geradlinigen Führungsstrecke (7) des Antriebsriemens zwei Abtasteinrichtungen (5, 6) angeordnet sind, welche die Markierungen (4) auf dem Antriebsriemen (3) abtasten und entsprechende Abtastsignale liefern;
- der Abstand der beiden Abtasteinrichtungen (5, 6) ein ganzzahliges Vielfaches des jeweiligen Abstands der Markierungen (4) voneinander ist; und
- beide Abtasteinrichtungen (5, 6) an die Signalauswerteeinrichtung (12) angeschlossen sind, welche geeignet ist, die Abtastsignale in Abhängigkeit vom Abstand, den die beiden Abtasteinrichtungen (5, 6) voneinander aufweisen, und der Laufgeschwindigkeit des Antriebsriemens (3) in zeitlichen Bezug zueinander zu setzen.

2. Bandantrieb mit Überwachungseinrichtung nach Anspruch 1, wobei eine an die Signalauswerteeinrichtung (12) angeschlossene Alarmeinrichtung (14) vorgesehen ist, welche bei einer, einen vorgegebenen Wert überschreitenden zeitlichen Abweichung der beiden Abtastsignale voneinander durch die Signalauswerteeinrichtung (12) angesteuert ist.

3. Bandantrieb mit Überwachungseinrichtung nach Anspruch 1 oder 2, wobei an die Signalauswerteeinrichtung ein Impulszähler (13) angeschlossen ist, der die von den Markierungen (4) des Antriebsriemens (3) abgeleiteten Impulse der impulsförmigen Abtastsignale (10) zählt, und mit einer Nullpunktabtasteinrichtung (19) gekoppelt ist, die eine Nullpunktmarkierung (18) des angetriebenen Rotors (1) abtastet zur Gewinnung von den jeweiligen Drehwinkelpositionen des Rotors (1) entsprechenden Winkelwerten.

4. Bandantrieb mit Überwachungseinrichtung nach einem der Ansprüche 1 bis 3, wobei der Rotor (1), gesteuert durch einen einer gewünschten Drehwinkelposition entsprechenden, von den Markierungen (4) des Antriebsriemens (3) abgeleiteten Zählwert, anhaltbar ist.

5. Bandantrieb mit Überwachungseinrichtung nach einem der Ansprüche 1 bis 4, wobei die Markierungen (4) strichförmig ausgebildet sind und sich quer zur Laufrichtung des Antriebsriemens (3) erstrecken.

6. Bandantrieb mit Überwachungseinrichtung nach einem der Ansprüche 1 bis 5, wobei eine Schwingungsabtasteinrichtung (21, 22, 24) für Transversalschwingungen des Antriebsriemens (3) vorgesehen ist.

7. Bandantrieb mit Überwachungseinrichtung nach Anspruch 6, wobei die Schwingungsabtasteinrichtung (21, 22, 24) als kapazitive Abtasteinrichtung ausgebildet ist.

8. Bandantrieb mit Überwachungseinrichtung nach Anspruch 6 oder 7, wobei die Schwingungsabtasteinrichtung (21, 22, 24) zwei Meßwertgeber aufweist, von denen der eine Meßwertgeber (22) in dem vom Rotor (1) zum Antriebsmotor (2) laufenden Teil des Antriebsriemens (3) und der andere Meßwertgeber (21) in dem vom Antriebsmotor (2) zum Rotor (1) zurücklaufenden Teil des Antriebsriemens (3) angeordnet sind.

9. Bandantrieb mit Überwachungseinrichtung nach einem der Ansprüche 1 bis 8, wobei an die Signalauswerteeinrichtung (12) und/oder an die Schwingungsabtasteinrichtung (21, 22, 24) eine Abschalteinrichtung (23) angeschlossen ist zum Stillsetzen des Antriebsmotors (2) bei Überschreitenvon Toleranzwerten der Riemenlängung und/oder der Transversalschwingungen.

10. Bandantrieb mit Überwachungseinrichtung nach einem der Ansprüche 1 bis 9, wobei für die Riemenführung (8, 9, 10, 11) eine Riemenspanneinrichtung (25) vorgesehen ist.

11. Bandantrieb mit Überwachungseinrichtung nach einem der Ansprüche 6 bis 10, wobei die Riemenspanneirnichtung (25) geeignet ist zum Nachspannen des Antriebsriemens (3) bei Überschreiten eines Toleranzwertes für die Transversalschwingungen.

12. Bandantrieb mit Überwachungseinrichtung nach Anspruch 10 oder 11, wobei die Riemenspanneinrichtung (25) so ausgebildet ist, daß sie in Abhängigkeit vom Überschreiten des Toleranzwertes für die Transversalschwingungen automatisch betätigbar ist.

13. Bandantrieb mit Überwachungseinrichtung nach einem der Ansprüche 10 bis 12, wobei der durch die Riemenspanneinrichtung nachgespannte Antriebsriemen (3) durch die Abtasteinrichtungen (5, 6), welche die Markierungen (4) des Antriebsriemens (3) abtasten, im Hinblick auf eine zulässige Längung überwacht ist.

14. Bandantrieb mit Überwachungseinrichtung nach einem der Ansprüche 1 bis 13, wobei aus der Abtastung der Riemenmarkierung und der Nullmarkierung (18) des Rotors (1) ein dem Riemenschlupf proportionales Schlupfsignal gebildet ist.

15. Bandantrieb mit Überwachungseinrichtung nach Anspruch 14, wobei das Schlupfsignal aus einer Änderung der zeitlichen Aufeinanderfolge des in Abhängigkeit von der abgetasteten Nullmarkierung (18) des Rotors (1) erzeugten Signals und der jeweils einem Rotorumfang entsprechenden, aus der Riemenmarkierung gewonnenen Abtastsignale gebildet ist.

16. Bandantrieb mit Überwachungseinrichtung nach Anspruch 15, wobei eine aus den Abtastsignalen gewonnene, einer Rotorumdrehung entsprechende Impulskette bei der Schlupfsignalbildung verwendet wird.

17. Bandantrieb mit Überwachungseinrichtung nach einem der Ansprüche 14 bis 16, wobei die Riemenspanneinrichtung (25) geeignet ist für die Betätigung in Abhängigkeit vom Schlupfsignal.

18. Bandantrieb mit Überwachungseinrichtung nach einem der Ansprüche 14 bis 17, wobei bei der Winkelpositionierung des Rotors (1) das Schlupfsignal zur Schlupfkompensation verwendet wird.

## Claims

1. A belt drive with monitoring arrangement, in which a torque produced by a drive motor is transmitted by way of an endless drive belt to a rotary member to be rotated, comprising:
- markings (4) which can be sensed and which are disposed on the drive belt (3) in its longitudinal direction and which are each at equal spacings from each other, and
- a signal evaluation means which evaluates the sensed signals, characterised in that
- arranged in succession in the direction of travel of the belt and along a rectilinear guide portion (7) of the drive belt are two sensing means (5, 6) which sense the markings (4) on the drive belt (3) and deliver corresponding sensing signals;
- the spacing between the two sensing means (5, 6) is an integral multiple of the respective spacing of the markings (4) from each other; and
- the two sensing means (5, 6) are connected to the signal evaluation means (12) for relating the sensing signals to each other in respect of time in dependence on the spacing between the two sensing means (5, 6) and the speed of travel of the drive belt (3).

2. A belt drive with monitoring arrangement according to claim 1 wherein there is provided an alarm means (14) which is connected to the signal evaluation means (12) and which is actuated by the signal evaluation means (12) when the two sensing signals differ from each other in respect of time by more than a predetermined value.

3. A belt drive with monitoring arrangement according to claim 1 or claim 2 wherein a pulse counter (13) is connected to the signal evaluation means, which pulse counter counts the pulses, which are derived from the markings (4) of the drive belt (3), of the pulse-form sensing signals (10), and is coupled to a zero point sensing means (19) which senses a zero point marking (18) on the driven rotary member (1) for producing angular values corresponding to the respective rotational angle positions of the rotary member (1).

4. A belt drive with monitoring arrangement according to one of claims 1 to 3 wherein the rotary member (1) can be stopped under the control of a count value which corresponds to a desired rotational angle position and which is derived from the markings (4) on the drive belt (3).

5. A belt drive with monitoring arrangement according to one of claims 1 to 4 wherein the markings (4) are in line form and extend transversely with respect to the direction of travel of the drive belt (3).

6. A belt drive with monitoring arrangement according to one of claims 1 to 5 wherein there is provided an oscillation sensing means (21, 22, 24) for sensing transverse oscillations of the drive belt (3).

7. A belt drive with monitoring arrangement according to claim 6 wherein the oscillation sensing means (21, 22, 24) is in the form of a capacitive sensing means.

8. A belt drive with monitoring arrangement according to claim 6 or claim 7 wherein the oscillation sensing means (21, 22, 24) has two measurement value generators of which the one measurement value generator (22) is arranged in the part of the drive belt (3) which runs from the rotary member (1) to the drive motor (2) and the other measurement value generator (21) is arranged in the part of the drive belt (3) which runs back from the drive motor (2) to the rotary member (1).

9. A belt drive with monitoring arrangement according to one of claims 1 to 8 wherein connected to the signal evaluation means (12) and/or to the oscillation sensing means (21, 22, 24) is a shut-off means (23) for stopping the drive motor (2) when tolerance values in respect of belt elongation and/or the transverse oscillations are exceeded.

10. A belt drive with monitoring arrangement according to one of claims 1 to 9 wherein a belt tensioning means (25) is provided for the belt guide means (8, 9, 10, 11).

11. A belt drive with monitoring arrangement according to one of claims 6 to 10 wherein the belt tensioning means (25) is capable of retentioning the drive belt (3) when a tolerance value in respect of the transverse oscillations is exceeded.

12. A belt drive with monitoring arrangement according to claim 10 or claim 11 wherein the belt tensioning means (25) is so designed that it can be automatically actuated in dependence on the tolerance value in respect of the transverse oscillations being exceeded.

13. A belt drive with monitoring arrangement according to one of claims 10 to 12 wherein the drive belt (3) which is retentioned by the belt tensioning means is monitored in respect of admissible elongation by the sensing means (5, 6) which sense the markings (4) on the drive belt (3).

14. A belt drive with monitoring arrangement according to one of claims 1 to 13 wherein a slip signal which is proportional to the belt slip is formed from sensing of the belt marking and the zero marking (18) on the rotary member (1).

15. A belt drive with monitoring arrangement according to claim 14 wherein the slip signal is formed from a variation in the time sequence of the signal produced in dependence on the sensed zero marking (18) on the rotary member (1), and the respective sensing signals which correspond to a circumference of the rotary member and which are obtained from the belt marking.

16. A belt drive with monitoring arrangement according to claim 15 wherein a pulse train which is obtained from the sensing signals and which corresponds to a revolution of the rotary member is used in the formation of the slip signal.

17. A belt drive with monitoring arrangement according to one of claims 14 to 16 wherein the belt tensioning means (25) is suitable for actuation in dependence on the slip signal.

18. A belt drive with monitoring arrangement according to one of claims 14 to 17 wherein the slip signal is used for slip compensation in angular positioning of the rotary member (1).

## Revendications

1. Dispositif d'entraînement à courroie, qui comporte un dispositif de contrôle et dans lequel un couple fourni par un moteur d'entraînement est transmis par l'intermédiaire d'une courroie d'entraînement sans fin à un rotor devant être entraîné en rotation, comportant
- des repères détectables (4), qui sont disposés sur la courroie d'entraînement (3), dans sa direction longitudinale et qui sont séparés par des intervalles identiques, et
- un dispositif d'exploitation de signaux, qui exploite les signaux détectés,
caractérisé par le fait que
- deux dispositifs de détection (5,6), qui détectent les repères (4) sur la courroie d'entraînement (3) et fournissent des signaux de détection correspondants, sont disposés l'un derrière l'autre dans la direction de circulation de la courroie et le long d'une section de guidage rectiligne (7) de la courroie d'entraînement;
- la distance des deux dispositifs de détection (5,6) est un multiple entier de l'intervalle entre les repères (4); et
- les deux dispositifs de détection (5,6) sont reliés au dispositif d'exploitation de signaux (12), lequel est apte à placer dans une relation temporelle les uns par rapport aux autres les signaux de détection en fonction de la distance qui sépare les deux dispositifs de détection (5,6) et de la vitesse de défilement de la courroie d'entraînement (3).

2. Dispositif d'entraînement à courroie ayant un dispositif de contrôle suivant la revendication 1, dans lequel il est prévu un dispositif d'alerte (14), qui est relié à un dispositif d'exploitation de signaux (12) et qui peut être commandé par le dispositif d'exploitation de signaux (12) dans le cas où l'écart dans le temps entre les deux signaux de détection dépasse une valeur prescrite.

3. Dispositif d'entraînement à courroie ayant un dispositif de contrôle suivant la revendication 1 ou 2, dans lequel un compteur d'impulsions (13), qui compte les impulsions, dérivées des repères (4) de la courroie d'entraînement (3), des signaux de détection de forme impulsionnelle (10), est reliée au dispositif d'exploitation de signaux et est couplé à un dispositif (19) de détection de point zéro, qui détecte un repère de point zéro (18) du rotor entraîné (1), pour l'obtention de valeurs angulaires, qui correspondent aux positions angulaires de rotation du rotor (1).

4. Dispositif d'entraînement à courroie ayant un dispositif de contrôle suivant l'une des revendications 1 à 3, dans lequel le rotor (1) peut être bloqué, d'une manière commandée par une valeur de comptage qui correspond à une position angulaire de rotation souhaitée et qui est dérivée des repères (4) de la courroie d'entraînement (3).

5. Dispositif d'entraînement à courroie ayant un dispositif de contrôle suivant l'une des revendications 1 à 4, dans lequel les repères (4) sont sous la forme de traits et s'étendent transversalement à la direction de déplacement de la courroie d'entraînement (3).

6. Dispositif d'entraînement à courroie ayant un dispositif de contrôle suivant l'une des revendications 1 à 5, dans lequel il est prévu un dispositif (21,22,24) de détection des oscillations transversales de la courroie d'entraînement (3).

7. Dispositif d'entraînement à courroie possédant un dispositif de contrôle suivant la revendication 6, caractérisé par le fait que le dispositif de détection des oscillations (21,22,24) est sous la forme d'un dispositif de détection capacitif.

8. Dispositif d'entraînement à courroie ayant un dispositif de contrôle suivant la revendication 6 ou 7, dans lequel le dispositif de détection des oscillations (21,22,24) comporte deux transmetteurs de valeurs de mesure, dont l'un (22) est disposé dans la partie de la courroie d'entraînement (3), qui va du rotor (1) au moteur d'entraînement (2), et dont l'autre (21) est disposé dans la partie de la courroie d'entraînement (3), qui revient du moteur d'entraînement (2) au rotor (1).

9. Dispositif d'entraînement à courroie possédant un dispositif de contrôle suivant l'une des revendications 1 à 8, dans lequel au dispositif d'exploitation de signaux (12) et/ou au dispositif de détection des oscillations (21,22,24) est relié un dispositif de débranchement (23) servant à arrêter le moteur d'entraînement (2) dans le cas où des valeurs de tolérance de l'allongement de la courroie et/ou des oscillations transversales sont dépassées.

10. Dispositif d'entraînement à courroie ayant un dispositif de contrôle suivant l'une des revendications 1 à 9, dans lequel un dispositif (25) de tension de la courroie est prévu pour le système (8,9,10,11) de guidage de la courroie.

11. Dispositif d'entraînement à courroie ayant un dispositif de contrôle suivant l'une des revendications 6 à 10, dans lequel le dispositif (25) de tension de la courroie est apte à retendre la courroie d'entraînement (3) dans le cas du dépassement d'une valeur de tolérance pour les oscillations transversales.

12. Dispositif d'entraînement à courroie ayant un dispositif de contrôle suivant la revendication 10 ou 11, dans lequel le dispositif (25) de tension de la courroie est agencé de telle sorte qu'il peut être actionné automatiquement en fonction du dépassement de la valeur de tolérance pour les oscillations transversales.

13. Dispositif d'entraînement à courroie ayant un dispositif de contrôle suivant l'une des revendications 10 à 12, dans lequel la courroie d'entraînement (3) retendue par le dispositif de tension de courroie est contrôlée, pour voir si elle présente un allongement admissible, par le dispositif de détection (5,6), qui détecte les repères (4) de la courroie d'entraînement (3).

14. Dispositif d'entraînement à courroie ayant un dispositif de contrôle suivant l'une des revendications 1 à 13, dans lequel un signal de glissement, proportionnel au glissement de la courroie, est formé à partir de la détection du repère de la courroie et du repère de point zéro (18) du rotor (1).

15. Dispositif d'entraînement à courroie ayant un dispositif de contrôle suivant la revendication 14, caractérisé par le fait que le signal de glissement est formé par une modification de la succession dans le temps du signal produit en fonction du repère de point zéro (18) détecté du rotor (1), et des signaux de détection, qui correspondent respectivement à une périphérie du rotor et qui sont obtenus à partir du repère de la courroie.

16. Dispositif d'entraînement à courroie ayant un dispositif de contrôle suivant la revendication 15, dans lequel un train d'impulsions, obtenue à partir des signaux de détection et correspondant à une rotation du rotor, est utilisée pour la formation du signal de glissement.

17. Dispositif d'entraînement à courroie ayant un dispositif de contrôle suivant l'une des revendications 14 à 16, dans lequel le dispositif (25) de tension de la courroie convient pour l'actionnement en fonction du signal de glissement.

18. Dispositif d'entraînement à courroie ayant un dispositif de contrôle suivant l'une des revendications 14 à 17, dans lequel, lors du positionnement angulaire du rotor (1), le signal de glissement est utilisé pour la compensation du glissement.
